# EUROPEAN PATENT APPLICATION

(11) **EP 4 622 363 A1**
(43) Date of publication of application: **24.09.2025**
(21) Application number: 24813882.8
(22) Date of filing: 02.04.2024
(51) Int. Cl.: H04W 64/00

(54) **POSITIONING METHOD AND APPARATUS, ELECTRONIC DEVICE, COMPUTER-READABLE STORAGE MEDIUM, AND COMPUTER PROGRAM PRODUCT**

(30) Priority: 31.05.2023 CN 202310638131
(71) Applicant: Tencent Technology (Shenzhen) Company Limited, Shenzhen, Guangdong 518057 (CN)
(72) Inventor: ZHONG, Shuo, Shenzhen, Guangdong 518057 (CN)
(74) Representative: Gunzelmann, Rainer
(86) International application number: PCT/CN2024/085522
(87) International publication number: WO 2024/244676

(57) **Abstract**

Embodiments of the present application provide a positioning method and apparatus, an electronic device, a computer-readable storage medium, and a computer program product, at least applied to the field of maps or traffic. The method is performed by the electronic device and comprises: in response to a positioning request, acquiring first pose information of a terminal; acquiring first virtual pose information of a visual image frame in a VIO coordinate system at the current moment; generating a conversion matrix on the basis of the first pose information and the first virtual pose information; converting second virtual pose information of the visual image frame in the VIO coordinate system at the next moment after and adjacent to the current moment by using the conversion matrix, to obtain converted second virtual pose information; and determining real pose information of the terminal at the next moment on the basis of the converted second virtual pose information.

## Description

### RELATED APPLICATION

This application claims priority to Chinese Patent Application No. 202310638131.1, filed on May 31, 2023, which is incorporated by reference in its entirety.

### FIELD OF THE TECHNOLOGY

Embodiments of the invention relate to the field of the Internet, and relate to but are not limited to a positioning method and apparatus, an electronic device, a computer-readable storage medium, and a computer program product.

### BACKGROUND OF THE DISCLOSURE

Currently, positioning typically relies on an integrated positioning engine on a server to determine a geographic position in the field of augmented reality (AR) indoor navigation. Orientation angle information configured for determining the geographic position is acquired by using a sensor (such as a compass) on a mobile phone.

However, when positioning is performed by using the integrated positioning engine on the server, the impact of the transmission latency on the positioning accuracy is not considered. In addition, when the orientation angle information is acquired by using the sensor on the mobile phone, the impact of low sensor precision on the orientation angle information is also not considered. As a result, a large positioning error may occur in an indoor navigation process, leading to a relatively poor navigation effect.

### SUMMARY

Embodiments of the invention provide a positioning method and apparatus, an electronic device, a computer-readable storage medium, and a computer program product, which are at least applicable to the field of maps and map positioning, effectively improve a problem of a large positioning error caused by low precision of a positioning sensor and the positioning latency, and improve positioning accuracy.

Technical solutions of the embodiments of the invention are implemented as follows.

The embodiments of the invention provide a positioning method, which is performed by an electronic device and includes: acquiring first pose information of a terminal in response to a positioning request, the positioning request corresponding to a visual image frame collected by the terminal at a current moment, and the first pose information being pose information of the visual image frame at the current moment in a geographic coordinate system (GCS); acquiring first virtual pose information of the visual image frame at the current moment in a Visual-Inertial Odometry (VIO) coordinate system; generating a transformation matrix based on the first pose information and the first virtual pose information; transforming, based on the transformation matrix, second virtual pose information of a visual image frame at a next moment that is subsequent and adjacent to the current moment in the VIO coordinate system, to obtain transformed second virtual pose information; and determining pose information of the terminal at the next moment based on the transformed second virtual pose information.

The embodiments of the invention provide a positioning apparatus, which includes: a first acquisition module, configured to acquire first pose information of a terminal in response to a positioning request, the positioning request corresponding to a visual image frame collected by the terminal at a current moment, and the first pose information being pose information of the visual image frame at the current moment in a GCS; a second acquisition module, configured to acquire first virtual pose information of the visual image frame at the current moment in a VIO coordinate system; a generation module, configured to generate a transformation matrix based on the first pose information and the first virtual pose information; a processing module, configured to transform, based on the transformation matrix, second virtual pose information of a visual image frame at a next moment that is subsequent and adjacent to the current moment in the VIO coordinate system, to obtain transformed second virtual pose information; and a determination module, configured to determine pose information of the terminal at the next moment based on the transformed second virtual pose information.

The embodiments of the invention provide an electronic device, which includes: a memory, configured to store executable instructions; and a processor, configured to execute the executable instructions stored in the memory to implement the positioning method.

The embodiments of the invention provide a computer program product, which includes executable instructions. The executable instructions are stored in a computer-readable storage medium. A processor of an electronic device reads the executable instructions from the computer-readable storage medium and executes the executable instructions, to implement the positioning method.

The embodiments of the invention provide a computer-readable storage medium, which has executable instructions stored therein. A processor executes the executable instructions, to implement the positioning method.

The embodiments of the invention have the following beneficial effects: when the positioning request corresponding to the visual image frame at the current moment is received, the first pose information of the terminal is acquired in response to the positioning request, the first virtual pose information of the visual image frame at the current moment in the VIO coordinate system is acquired, and the transformation matrix is generated based on the first pose information and the first virtual pose information; and the second virtual pose information of the visual image frame at the next moment that is subsequent to the current moment and that is adjacent to the current moment in the VIO coordinate system is transformed based on the transformation matrix, to obtain the transformed second virtual pose information. After a transformation matrix is obtained based on server real positioning information at a current moment and a VIO virtual positioning information, in a positioning process, VIO virtual pose information at a next moment is directly transformed based on the transformation matrix, to obtain real pose information of a terminal at the next moment, without the need of performing positioning by using a positioning engine on the server and a sensor on the terminal. Therefore, transmission latency can be significantly reduced, impact of sensor precision on positioning accuracy can be reduced, and positioning accuracy can be improved. In addition, because the transformation matrix at the next moment is determined based on the current moment, server positioning may be performed at intervals in the positioning process, to continuously update the transformation matrix. Therefore, positioning accuracy can be further improved.

### BRIEF DESCRIPTION OF THE DRAWINGS

FIG. 1 is a schematic architectural diagram of a positioning system according to an embodiment of the invention.
FIG. 2 is a schematic structural diagram of an electronic device according to an embodiment of the invention.
FIG. 3 is a schematic flowchart of a positioning method according to an embodiment of the invention.
FIG. 4 is another schematic flowchart of a positioning method according to an embodiment of the invention.
FIG. 5 is a schematic flowchart of an implementation of determining first pose information according to an embodiment of the invention.
FIG. 6 is a schematic flowchart of an implementation of generating a transformation matrix according to an embodiment of the invention.
FIG. 7A is a schematic flowchart of an implementation of a positioning method in an augmented reality (AR) walking navigation scenario according to an embodiment of the invention.
FIG. 7B is a schematic flowchart of an implementation of a positioning method for a mini program according to an embodiment of the invention.
FIG. 8 is a schematic flowchart of an implementation of generating a positioning request according to an embodiment of the invention.
FIG. 9 is a schematic architectural diagram of a world coordinate system and a Visual-Inertial Odometry (VIO) coordinate system according to an embodiment of the invention.
FIG. 10 is a schematic flowchart of another implementation of generating a transformation matrix according to an embodiment of the invention.
FIG. 11 is a schematic flowchart of scene rendering according to an embodiment of the invention.
FIG. 12 is a schematic flowchart of positioning according to an embodiment of the invention.
FIG. 13 is a schematic diagram of an application scenario of a positioning method according to an embodiment of the invention.
FIG. 14 is a schematic flowchart of a positioning method added with scene rendering according to an embodiment of the invention.

### DESCRIPTION OF EMBODIMENTS

To make the objectives, technical solutions, and advantages of the invention clearer, the following describes the invention in further detail with reference to the accompanying drawings. The described embodiments are not to be considered as a limitation on the invention. All other embodiments obtained by those of ordinary skill in the art without involving creative efforts fall within the scope of protection of the invention.

In the following descriptions, related "some embodiments" describe a subset of all possible embodiments. However, the "some embodiments" may be the same subset or different subsets of all the possible embodiments, and may be combined with each other without conflict. The features defined in the "some embodiments" can also be used in other embodiments, and can be combined with each other without conflict. Unless otherwise defined, meanings of all technical and scientific terms used in the embodiments of the invention are the same as those usually understood by those skilled in the art to which the embodiments of the invention belong. Terms used in the embodiments of the invention are merely intended to describe the embodiments of the invention, but are not intended to limit the invention.

Before a positioning method provided in the embodiments of the invention is described, some professional terms involved in the embodiments of the invention are first described.
(1) Mini program: it is an application that can be used without the need of downloading, and a user can access the application by scanning a QR code or through searching, achieving instant accessibility.
(2) Indoor navigation: it is a technology that uses augmented reality (AR) paths and virtual arrows in indoor space, and combines the AR virtual arrows and directions with an indoor map to guide a user to a destination. In this way, the user in a large building can still determine a position of the user and reach the destination based on a precise positioning function even if the user is in the building.
(3) Indoor visual positioning: it is a process in which after an existing indoor environment is captured by using a laser visual map capturing device, a three-dimensional point cloud map is established, and a current position and attitude of a camera in the indoor environment are predicted based on a single image photographed by the camera.
(4) AR: it is a technology that skillfully integrates virtual information with the real world. It simulates computer-generated virtual information such as text, images, three-dimensional models, music, and videos by making extensive use of a variety of techniques such as multimedia, three-dimensional modeling, real-time positioning and registration, intelligent interaction, and sensors, and then applies the virtual information to the real world. The two types of information are complementary to each other, whereby the real world is augmented.
(5) Visual-Inertial Odometry (VIO): it is an algorithm integrating a camera image and inertial measurement unit (IMU) data to implement simultaneous localization and mapping (SLAM). A related camera image is analyzed to determine a position and a direction. The positioning method provided in the embodiments of the invention may be applied to a mini-program-embedded indoor AR navigation solution. In the mini-program-embedded indoor AR navigation solution, VIO within a mini program in an instant messaging application refers to a function open under a visual application programming interface (API) of the mini program. VIO within the mini program is a VIO technology used in the mini program. VIO within the mini program may estimate information, such as a position, a speed, and a direction, of the mini program in a three-dimensional space in real time by integrating a camera image and sensor data (such as an accelerometer and a gyroscope) of the mini program. The VIO technology may be applied to functions, such as navigation, positioning, and control, of the mini program.
(6) SLAM: it is a technology that instructs an autonomous mobile robot to start from an unknown position in an unknown environment, determine a position and a posture of the autonomous mobile robot based on repeatedly observed map features (such as a wall corner and a column) in a movement process, and then incrementally construct a map according to the position of the autonomous mobile robot, to achieve simultaneous localization and mapping.
(7) IMU: it is an apparatus for measuring a three-axis attitude angle (or an angular rate) and acceleration of an object, such as a gyroscope and an accelerometer on a mobile phone.
(8) Structure-From-Motion (SFM): it is also referred to as sparse three-dimensional reconstruction, is an offline algorithm for performing three-dimensional reconstruction based on collected unordered images, is a common technology in computer vision and computer graphics, and is configured for estimating motion of a camera and a three-dimensional structure of a scene from a plurality of unordered images. A corresponding three-dimensional structure may be recovered from a plurality of two-dimensional images through the SFM technology, to implement scene reconstruction and camera motion estimation. The SFM technology is widely applied to the fields such as AR, virtual reality, computer photography, and computer vision.
(9) Geographic coordinate system (GCS): it is a coordinate system in which a position on a surface of the earth is defined based on a three-dimensional spherical surface, to reference a point on the surface of the earth through longitude and latitude, such as a GCJ-02 coordinate system.

In the related art, a main process of the mini-program-embedded indoor AR navigation solution includes: Bluetooth, Wi-Fi, accelerometer, compass, and gyroscope information is acquired through an interface provided by a mini program or an application program (APP); real-time position information is acquired by using an integrated positioning engine, and the position information is updated every second; posture information and steering information of a mobile phone are acquired; a surrounding point of interest (POI), a signboard, and road information are acquired based on a real-time positioning result through an integrated map engine; a camera photo is acquired by using the mini program or the APP, and basic determination is performed on the mobile phone; the photo is transmitted to a server for image recognition when a condition is satisfied; it is determined that the condition is satisfied when a store, a sign, and a scene apparently change in the camera photo and the periodic interval time is reached; then, a positioning system confirms or corrects a current position and direction according to the store name and the sign; and determines, according to road recognition, whether it is on a road currently, then determines a specific walking road according to a position, and finally determines a walking direction on the current road according to a compass direction; and then, a relative pose of the road in the photo is confirmed according to the photo of the road and the posture of the mobile phone; an AR icon is superimposed on the photo, and information, such as the POI and the sign, is superimposed on the camera photo in proportion according to relative front-rear and left-right positions; and finally, in a turning state of the road, the turning state is confirmed by using a gyroscope; and when turning is performed, the AR icon changes with turning.

It can be seen from the foregoing description that in the related art, implementation of positioning relies on an integrated positioning engine on a server and a sensor on a mobile phone, namely, a compass on the mobile phone. Therefore, the following two problems may exist: On one hand, when positioning is performed by using the integrated positioning engine on the server, impact of transmission latency of a request is not considered, and a problem that positioning with poor timeliness easily occurs in an area with a poor network. In addition, in a process of performing image identification by the integrated positioning engine on the server according to a mobile phone image, transmission latency of a recognition result may exist, causing a large positioning error. On the other hand, when positioning is performed by using the compass on the mobile phone, electromagnetic interference or a compass frame rate in an indoor environment may affect positioning accuracy. In conclusion, in a positioning process, a large positioning error will be caused by transmission latency or sensor precision, resulting in low positioning accuracy. Therefore, a navigation effect is affected.

According to the positioning method provided in the embodiments of the invention, first, after first pose information of a terminal is acquired in response to a positioning request, first virtual pose information of a visual image frame at a current moment in a VIO coordinate system is acquired; then, a transformation matrix is generated based on the first pose information and the first virtual pose information; then, second virtual pose information of a visual image frame at a next moment that is subsequent and adjacent to the current moment in the VIO coordinate system is transformed based on the transformation matrix, to obtain transformed second virtual pose information; and finally, real pose information of the terminal at the next moment is determined based on the transformed second virtual pose information. Positioning of the terminal from the current moment to the next moment is implemented based on the real pose information. In the embodiments of the invention, after a transformation matrix is obtained based on server positioning information (namely, the first pose information) at a current moment and virtual positioning information (that is, the first virtual pose information) in the VIO coordinate system, in a positioning process, VIO virtual pose information (including position information and an orientation) at a next moment is directly transformed based on the transformation matrix, to obtain real pose information at the next moment, without the need of performing positioning by using a positioning engine on the server and a sensor on a terminal for each moment. Therefore, impact of transmission latency and sensor precision on positioning accuracy is avoided, and positioning accuracy is improved. In addition, because the transformation matrix at the next moment is determined based on the current moment, server positioning may be performed at intervals in the positioning process to update the transformation matrix. Therefore, positioning accuracy is further improved.

Herein, an exemplary application of a positioning device provided in the embodiments of the invention is first described. The positioning device is an electronic device configured to implement the positioning method. In an implementation, the positioning device (that is, the electronic device) provided in the embodiments of the invention may be implemented as a terminal, or may be implemented as a server. In an implementation, the positioning device provided in the embodiments of the invention may be implemented as any terminal having a navigation function and a video display function, such as a notebook computer, a tablet computer, a desktop computer, a mobile phone, a portable music player, a personal digital assistant, a dedicated message device, a portable game device, a smart robot, a smart home appliance, or a smart on-board device. In another implementation, the positioning device provided in the embodiments of the invention may alternatively be implemented as a server. The server may be an independent physical server, or may be a server cluster or distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform. The terminal and the server may be connected directly or indirectly by using a wired or wireless communication protocol. This is not limited in the embodiments of the invention. An exemplary application in which the positioning device is implemented as a server is to be described below.

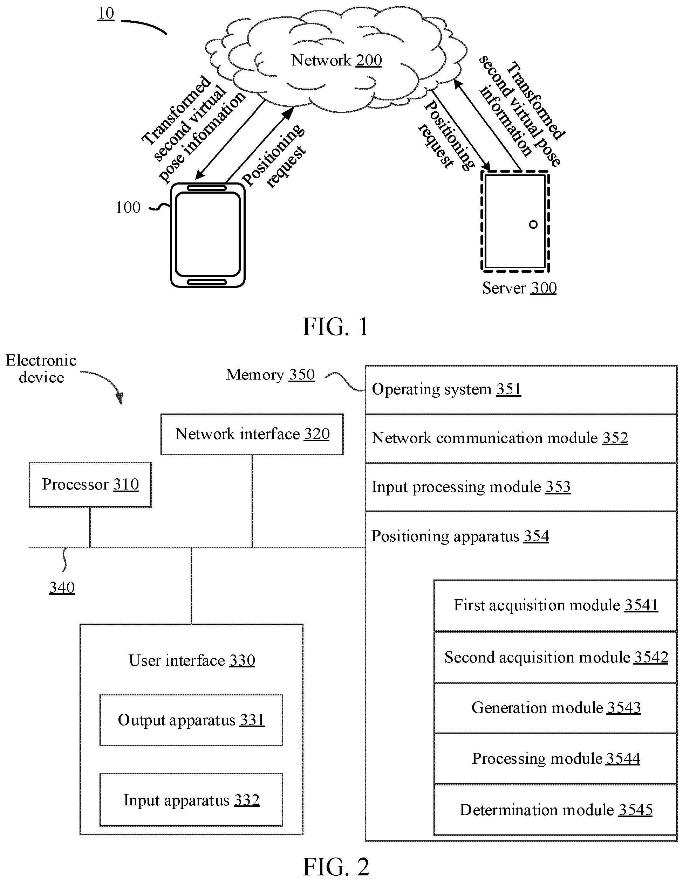

FIG. 1 is a schematic architectural diagram of a positioning system according to an embodiment of the invention. In the embodiments of the invention, a description is made by using an example in which the positioning method is applied to any positioning application. In the embodiments of the invention, a positioning system 10 includes at least a terminal 100, a network 200, and a server 300. A positioning application may be installed on the terminal 100, and a user may transmit a positioning request on a client of the positioning application. The server 300 may be a server of the positioning application. The server 300 may constitute a positioning device provided in the embodiments of the invention. The terminal 100 is connected to the server 300 through the network 200. The network 200 may be a wide area network, a local area network, or a combination of the two.

In the embodiments of the invention, the positioning application runs on the terminal 100. During positioning, the terminal 100 receives a visual image frame at a current moment transmitted by the user, encapsulates the visual image frame at the current moment within the positioning request, and transmits the positioning request to the server 300 over the network 200. The server 300 acquires first pose information of the terminal in response to the positioning request, and acquires first virtual pose information of the visual image frame at the current moment in the VIO coordinate system from the terminal 100; then, generates a transformation matrix based on the first pose information and the first virtual pose information; and next, transforms second virtual pose information of a visual image frame at a next moment in the VIO coordinate system based on the transformation matrix, to obtain transformed second virtual pose information, and determines real pose information of the terminal at the next moment based on the transformed second virtual pose information. In this way, positioning of the terminal is implemented. After determining the transformed second virtual pose information, the server 300 may transmit the transformed second virtual pose information to the terminal 100 over the network 200, and the terminal 100 may display the transformed second virtual pose information on a current interface. Alternatively, the server 300 may determine the real pose information of the terminal at the next moment based on the transformed second virtual pose information, and the terminal displays the real pose information at the next moment.

In addition, in the embodiments of the invention, a time interval between the current moment and the next moment is less than a duration threshold, that is, the time interval between the current moment and the next moment is very small. Generally, in a positioning scenario, a user is in a moving state, or positioning is performed in a navigation scenario. In addition, according to the positioning method provided in the embodiments of the invention, a time interval is required for algorithm implementation. Therefore, in the embodiments of the invention, the real pose information of the terminal at the next moment is determined instead of taking the real pose information at the current moment as a current positioning result. In this way, a positioning error caused by movement of the user or movement in the navigation scenario can be avoided.

In some other embodiments, the positioning device may alternatively be implemented as a terminal. In other words, a positioning application is installed on the terminal 100, and the positioning method provided in embodiments of the invention is implemented by the terminal. During implementation, the terminal 100 acquires, by using the positioning application, a visual image frame at a current moment that is collected by a user, and acquires first pose information of the terminal from the server 300 over the network 200 in response to a positioning request; then, the terminal 100 acquires first virtual pose information of the visual image frame at the current moment in a VIO coordinate system, and generates a transformation matrix based on the first pose information and the first virtual pose information; and next, transforms second virtual pose information of a visual image frame at a next moment in the VIO coordinate system based on the transformation matrix, to obtain transformed second virtual pose information. After obtaining the transformed second virtual pose information, the terminal 100 may display the obtained transformed second virtual pose information on a current interface, or may directly determine real pose information of the terminal at the next moment based on the transformed second virtual pose information.

The positioning method provided in the embodiments of the invention may alternatively be implemented based on a cloud platform through a cloud technology. For example, the server 300 is a cloud server. The cloud server generates a transformation matrix, or transforms second virtual pose information of a visual image frame at a next moment in a VIO coordinate system based on the transformation matrix, to obtain transformed second virtual pose information.

In some embodiments, a cloud memory may further be included. Information, such as the first pose information and the first virtual pose information, may be stored into the cloud memory, or the transformation matrix may be stored into the cloud memory. In this way, when the second virtual pose information is subsequently transformed, the stored transformation matrix may be directly selected from the cloud memory for transformation. Therefore, positioning efficiency is improved.

In addition, the cloud technology refers to a hosting technology that unifies hardware, software, networks, and other resources in a wide area network or a local area network to achieve computation, storage, processing, and sharing of data. The cloud technology is a general term for network technology, information technology, integration technology, management platform technology, and application technology that are applied based on a business mode of cloud computing, and may form a resource pool and is used on demand in a flexible and convenient manner. The cloud computing technology will become an important support. A backend service of a technical network system requires a large amount of computing and storage resources, such as video websites, image websites, and more portal websites. With the high development and application of the Internet industry, each item may have its own identifier in the future and needs to be transmitted to a backend system for logical processing. Data at different levels is separately processed, and data in various industries requires strong system support, which may be implemented through cloud computing.

FIG. 2 is a schematic structural diagram of an electronic device according to an embodiment of the invention. The electronic device shown in FIG. 2 may be a positioning device, which includes: at least one processor 310, a memory 350, at least one network interface 320, and a user interface 330. The components in the positioning device are coupled together through a bus system 340. The bus system 340 is configured for implementing connection and communication between the components. In addition to a data bus, the bus system 340 further includes a power bus, a control bus, and a state signal bus. However, for clarity of description, all types of buses in FIG. 2 are marked as the bus system 340.

The processor 310 may be an integrated circuit chip having a signal processing capability, such as a general purpose processor, a digital signal processor (DSP), another programmable logic device, discrete gate or transistor logic device, or discrete hardware component, or the like. The general purpose processor may be a microprocessor, any conventional processor, or the like.

The user interface 330 includes one or more output apparatuses 331 that can display media content, and one or more input apparatuses 332.

The memory 350 may be removable, non-removable, or a combination thereof. Exemplary hardware devices include a solid memory, a hard disk drive, an optical disk drive, and the like. In an embodiment, the memory 350 includes one or more storage devices that are physically located remote from processor 310. The memory 350 includes a volatile memory or a non-volatile memory, or may include both a volatile memory and a non-volatile memory. The non-volatile memory may be a read-only memory (ROM), and the volatile memory may be a random-access memory (RAM). The memory 350 described in the embodiments of the invention is intended to include any suitable type of memory. In some embodiments, the memory 350 can store data to support various operations. Examples of the data include a program, a module, a data structure, or a subset or superset thereof, and are exemplarily described below.

An operating system 351 includes system programs configured for processing various basic system services and executing hardware-related tasks, such as a framework layer, a core library layer, and a drive layer, and is configured for implementing various basic services and processing hardware-based tasks. A network communication module 352 is configured to reach another computing device through one or more (wired or wireless) network interfaces 320. Exemplary network interfaces 320 include: Bluetooth, wireless fidelity (Wi-Fi), Universal Serial Bus (USB), and the like. An input processing module 353 is configured to detect one or more user inputs or interactions from one of the one or more input apparatuses 332 and translate the detected input or interaction.

In some embodiments, an apparatus provided in the embodiments of the invention may be implemented in the form of software. FIG. 2 shows a positioning apparatus 354 stored in the memory 350. The positioning apparatus 354 may be a positioning apparatus in the electronic device, which may be software in the form of program, plug-in, or the like, and includes the following software modules: a first acquisition module 3541, a second acquisition module 3542, a generation module 3543, a processing module 3544, and a determination module 3545. These modules are logical modules, and may be combined in different manners or further split according to the implemented functions. The functions of the modules are to be explained below.

In some other embodiments, the apparatus provided in the embodiments of the invention may be implemented in the form of hardware. For example, the apparatus provided in the embodiments of the invention may be a processor in the form of hardware decoding processor, which is programmed to perform the positioning method provided in the embodiments of the invention. For example, the processor in the form of hardware decoding processor may adopt one or more application specific integrated circuits (ASIC), a DSP, a programmable logic device (PLD), a complex PLD (CPLD), a field-programmable gate array (FPGA), or another electronic component.

The positioning method provided in the embodiments of the invention may be performed by an electronic device. The electronic device may be a server or a terminal. That is, the positioning method provided in the embodiments of the invention may be performed by a server, or may be performed by a terminal, or may be interactively performed by a terminal and a server.

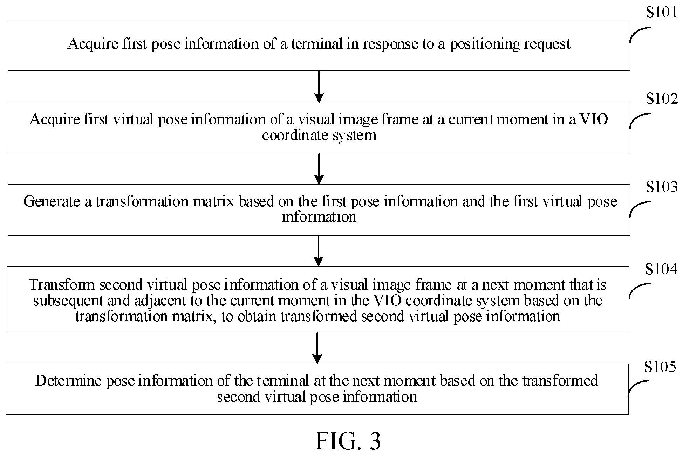

FIG. 3 is a schematic flowchart of a positioning method according to an embodiment of the invention. The method is described below with reference to operations shown in FIG. 3. A description is made by using an example in which the positioning method in FIG. 3 is performed by a server. As shown in FIG. 3, the method includes operation S101 to operation S106.

Operation S101: Acquire first pose information of a terminal in response to a positioning request.

The positioning request corresponds to a visual image frame collected by the terminal at a current moment (the visual image frame at the current moment may be referred to as a first visual image frame). In an embodiment, the positioning request includes the visual image frame collected by the terminal at the current moment. The first pose information is pose information (i.e., real pose information) of the visual image frame at the current moment in a GCS.

Herein, the first pose information includes at least geographic position information and orientation information of the visual image frame at the current moment in the GCS.

In the embodiments of the invention, the visual image frame at the current moment may be a visual image frame at a current moment that is collected by the terminal when a user is located in different environments, such as a visual image frame at a current moment that is collected by the terminal when the user is located in an indoor building, or a visual image frame at a current moment that is collected by the terminal when the user is located in a scenic area. The terminal may collect, by using a camera carried on the terminal, the visual image frame at the current moment when the user is in different environments, render the collected visual image frame at the current moment, and display the rendered visual image frame at the current moment on a current interface of the terminal. For example, the terminal performs Canvas rendering on the collected visual image frame at the current moment, and displays the visual image frame at the current moment that is subjected to Canvas rendering on the current interface of the terminal.

In the embodiments of the invention, a positioning application may be run on the terminal. For example, the positioning application may be run in the form of mini program, or the positioning application may be run in the form of H5 page. The visual image frame at the current moment may be a visual image frame at a current moment that is collected by the user via a camera, or may be a visual image frame at a current moment that is automatically collected by the positioning application according to a preset condition. Then, the terminal may encapsulate the visual image frame at the current moment within the positioning request, and transmit the positioning request to the server.

For the first pose information, the server may perform image collection on an environment that needs to be positioned in advance by using another electronic device such as a robot. A three-dimensional image point cloud map is established based on a collected image by using an SFM technology. Subsequently, the server acquires the first pose information of the terminal based on the three-dimensional image point cloud map in response to the positioning request.

In the embodiments of the invention, after receiving the positioning request transmitted by the terminal, in response to the positioning request, the server may perform feature matching on the visual image frame at the current moment and the three-dimensional image point cloud map, to obtain the geographic position information and the orientation information of the visual image frame at the current moment in the GCS. For example, the GCS includes a GCJ-02 coordinate system, and the server acquires geographic position information and orientation information that correspond to the visual image frame at the current moment in the GCJ-02 coordinate system. In the GCJ-02 coordinate system, a WGS 84 ellipsoid is adopted, and longitude and latitude are encrypted for security. The GC J-02 coordinate system is often applied to map, navigation, and positioning services. Certainly, in some embodiments, the foregoing GCS may alternatively be a CGCS 2000 coordinate system and a CGCS 2020 coordinate system that are gradually developed based on the GCJ-02. This is not specifically limited in the embodiments of the invention.

In the embodiments of the invention, the True North Azimuth Angle may be taken as a reference orientation of the GCS, and a particular position in the coordinate system may be taken as a reference position of the GCS. That is, the server can acquire the orientation information, relative to the reference orientation, of the visual image frame at the current moment in the GCJ-02 coordinate system, and the geographic position, relative to the reference position, of the visual image frame at the current moment in the GCJ-02 coordinate system, such as longitude and latitude that are relative to the reference position.

During positioning, the server determines the geographic position information and the orientation information of the visual image frame at the current moment in the GCS, and a sensor on the terminal does not need to determine the orientation information. Therefore, a problem of inaccurate orientation information caused by electromagnetic interference on the sensor or an insufficient frame rate can be avoided, and positioning accuracy can be improved.

Operation S102: Acquire first virtual pose information of a visual image frame at a current moment in a VIO coordinate system.

Herein, the first virtual pose information includes at least virtual position information and orientation information of the visual image frame at the current moment in the VIO coordinate system.

In addition, the first virtual pose information is relative position information. That is, the first virtual pose information is position information and orientation information of the visual image frame at the current moment relative to a reference pose of the VIO coordinate system. The reference poses of the VIO coordinate system may dynamically change. The reference poses of the VIO coordinate system are associated with a position and an orientation of the terminal when the server establishes the VIO coordinate system. When the user triggers a VIO function on the terminal, the terminal may acquire position information and orientation information at a moment when the VIO function is triggered, and the VIO coordinate system is established by taking the position information and the orientation information at the moment when the terminal triggers the VIO function as reference information. Then, the terminal determines, based on the reference information of the VIO coordinate system, the first virtual pose information corresponding to the visual image frame at the current moment in the VIO coordinate system, and transmits the first virtual pose information to the server.

In the embodiments of the invention, in the VIO coordinate system, virtual pose information may be defined based on a rectangular coordinate system. For example, in a case that in the VIO coordinate system, the virtual pose information is defined based on a three-dimensional rectangular coordinate system, the first virtual pose information includes virtual position information and orientation information that correspond to the X-axis, the Y-axis, and the Z-axis.

In the embodiments of the invention, the VIO coordinate system refers to a coordinate system used in VIO. Generally, the coordinate system used in VIO includes: a camera coordinate system, configured for indicating a position and an orientation of a camera, typically taking an optical center of the camera as an origin, an optical axis of the camera as the z-axis, an orientation of the camera as the x-axis, and an axis perpendicular to a plane that is jointly determined by the z-axis and the x-axis as the y-axis; an IMU coordinate system, configured for representing outputs of an accelerometer and a gyroscope of an IMU device, the IMU device typically including a three-axis accelerometer and a three-axis gyroscope, and coordinate systems of the accelerometer and the gyroscope being determined according to an installation direction of the device, and typically having a particular deflection relative to a camera coordinate system; and a world coordinate system, configured for representing an absolute position and direction of an entire motion system, a motion trajectory of a device and a three-dimensional structure of a scene being estimated in the world coordinate system by integrating data of a camera and an IMU.

In the embodiments of the invention, in the process of determining the first virtual pose information, a positioning function corresponding to the VIO function is high in precision, and can return precise virtual pose information within a particular interval. Therefore, positioning accuracy of the virtual pose information can be improved.

Operation S103: Generate a transformation matrix based on the first pose information and the first virtual pose information.

Herein, the transformation matrix is configured for implementing transformation between the VIO coordinate system and the GCS.

In the embodiments of the invention, in the GCS, real geographic position information and real orientation information that correspond to the visual image frame at the current moment are defined based on a spherical surface, and in the VIO coordinate system, virtual geographic position information and virtual orientation information that correspond to the visual image frame at the current moment are defined based on a rectangular coordinate system. Therefore, the server may establish a relationship with the VIO coordinate system based on the reference information of the GCS, to generate the transformation matrix.

In the embodiments of the invention, a Cartesian coordinate system may include a rectangular coordinate system and an oblique coordinate system. That is, in the Cartesian coordinate system, real geographic position information and real orientation information that correspond to the visual image frame at the current moment may be defined based on the rectangular coordinate system. Therefore, the server may first transform the GCS into the Cartesian coordinate system, and then establish a relationship between the Cartesian coordinate system and the VIO coordinate system. For example, the server performs planar projection on the GCS based on reference information of the GCS, to obtain a GCS subjected to planar projection (i.e., a projected GCS); next, adjusts reference information of the projected GCS, to transform the projected GCS into a Cartesian coordinate system; then, obtains, based on reference information of the Cartesian coordinate system, second pose information corresponding to the visual image frame at the current moment in the Cartesian coordinate system; and determines a transformation matrix based on the second pose information in the Cartesian coordinate system and the first virtual pose information in the VIO coordinate system.

In addition, the GCS may include a GCJ-02 coordinate system. The GCJ-02 coordinate system is typically a coordinate system obtained through deflection according to a deflection algorithm. Therefore, the GCJ-02 coordinate system cannot be directly transformed into the Cartesian coordinate system. To implement transformation between the GCS and the Cartesian coordinate system, the server may transform the GCJ-02 coordinate system into a WG584 coordinate system based on reference information of the GCJ-02 coordinate system by using a deflection correction algorithm, and perform planar projection on the WG584 coordinate system, to obtain a WG584 coordinate system subjected to planar projection; next, adjust reference information of the WG584 coordinate system subjected to planar projection, to transform the WG584 coordinate system subjected to planar projection into a Cartesian coordinate system; and then, obtain second pose information corresponding to the visual image frame at the current moment in the Cartesian coordinate system based on reference information of the Cartesian coordinate system, and further determine a transformation matrix.

Herein, the WG584 coordinate system is a coordinate system in wireless communication. In the WG584 coordinate system, coordinate data is acquired based on a satellite navigation system of International Telecommunications Satellite Organization (ITU) by using satellite positioning and pseudo-range measurement techniques. In the WG584 coordinate system, a position is usually indicated in the form of latitude and longitude, that is, is indicated by latitude, longitude, and an elevation (altitude). The WG584 coordinate system is high in precision and reliability, and is applicable to various wireless communications application scenarios such as positioning, navigation, communication coverage, and signal coverage. In the field of wireless communications, the WG584 coordinate system is widely applied to aspects such as base station positioning, network optimization, and signal coverage.

In some embodiments, in the process of determining the transformation matrix, to avoid an accumulated error caused by the pose information, the server may re-acquire the first pose information and the first virtual pose information at intervals, and update the transformation matrix based on the re-acquired first pose information and first virtual pose information, to obtain an updated transformation matrix. For example, the server acquires the first pose information at an interval of first duration. A value of the first duration may be set as needed, for example, is set to 5 seconds. The server may further acquire the first virtual pose information at an interval of second duration. A value of the second duration may be set as needed, for example, is set to 1 second. In this way, timeliness of positioning in a positioning process can be improved, and positioning accuracy can be ensured.

Operation S104: Transform second virtual pose information of a visual image frame at a next moment that is subsequent and adjacent to the current moment in the VIO coordinate system based on the transformation matrix, to obtain transformed second virtual pose information.

The transformed second virtual pose information is configured for determining pose information (i.e., real pose information) of the terminal at the next moment. Herein, the second virtual pose information includes at least virtual position information and orientation information that correspond to the visual image frame at the next moment that is subsequent and adjacent to the current moment in the VIO coordinate system. The visual image frame at the next moment may be referred to as a second visual image frame.

In the embodiments of the invention, a positioning application may be run on the terminal. For example, the positioning application may be run in the form of mini program, or the positioning application may be run in the form of H5 page. The visual image frame at the next moment that is subsequent and adjacent to the current moment may be a visual image frame at a next moment that is collected by a user via a camera, or may be a visual image frame at a next moment subsequent and adjacent to the current moment, which is automatically collected by the positioning application according to a preset condition. After collecting the visual image frame at the next moment, the terminal may transmit the visual image frame at the next moment to the server in real time, and the server acquires the second virtual pose information of the visual image frame at the next moment in the VIO coordinate system.

In addition, the second virtual pose information is position information and orientation information of the visual image frame at the next moment that is subsequent and adjacent to the current moment relative to reference information of the VIO coordinate system. That is, the server acquires the second virtual pose information of the visual image frame at the next moment in the VIO coordinate system based on the reference information of the VIO coordinate system.

Operation S105: Determine pose information of the terminal at the next moment based on the transformed second virtual pose information.

In the embodiments of the invention, after acquiring the second virtual pose information, the server may transform the second virtual pose information based on the transformation matrix, to obtain the transformed second virtual pose information. For example, if the transformation matrix is configured for transforming virtual pose information in the VIO coordinate system into real pose information in the world coordinate system, the server directly transforms the second virtual pose information based on the transformation matrix; and if the transformation matrix is configured for transforming real pose information in the world coordinate system into virtual pose information in the VIO coordinate system, the server transforms the second virtual pose information based on an inverse matrix of the transformation matrix.

When the transformed second virtual pose information is obtained, the pose information (i.e., real pose information) of the terminal at the next moment, that is, the pose information of the second visual image frame at the next moment in the GCS may be determined based on the transformed second virtual pose information.

In the embodiments of the invention, the server can quickly transform the second virtual pose information based on the transformation matrix, to determine the real pose information of the terminal at the next moment, that is, determine a position of the terminal at the next moment without the need of positioning through feature matching and a sensor on the terminal. Therefore, a positioning error can be reduced, and positioning accuracy can be improved.

In some embodiments, in addition to the foregoing positioning scenario, navigation may be further performed based on the real pose information of the terminal at the next moment that is determined by the positioning method. That is, in an application scenario where a user needs path navigation, the positioning method provided in the embodiments of the invention is further applicable to a navigation scenario. That is, path information for current path navigation may further be generated for the user, and the path information may further be displayed for the user while the user is positioned, to guide the user to reach a destination corresponding to the current path navigation. After target position information for current path navigation that is transmitted by the terminal, the server determines path information based on the transformed second virtual pose information and the target position information. The path information includes guidance information for reaching a target position corresponding to the target position information. Herein, the guidance information includes at least a sign of the target position corresponding to the target position information, route guidance, and POI information.

After generating the guidance information, the server may transmit the guidance information to the terminal. The terminal displays the guidance information on the client of the positioning application, to implement superimposition of the guidance information and the real visual image frame. Therefore, accuracy of superimposition of virtual path information and a real image in a positioning process can be effectively improved, whereby the user has a good immersive navigation experience.

According to the positioning method provided in the embodiments of the invention, the first pose information of the terminal is acquired in response to the positioning request, the first virtual pose information of the visual image frame at the current moment in the VIO coordinate system is acquired, and the transformation matrix is generated based on the first pose information and the first virtual pose information; and the second virtual pose information of the visual image frame at the next moment that is subsequent and adjacent to the current moment in the VIO coordinate system is transformed based on the transformation matrix, to obtain the transformed second virtual pose information. After a transformation matrix is obtained based on real positioning information and VIO virtual pose information of a server at a current moment, in a positioning process, VIO virtual pose information at a next moment is directly transformed based on the transformation matrix, to obtain real pose information at the next moment, without the need of performing positioning for the next moment by using a positioning engine on the server and a sensor on a terminal. Therefore, impact of transmission latency and sensor precision on positioning accuracy is avoided, and positioning accuracy is improved. In addition, because the transformation matrix at the next moment is determined based on the current moment, server positioning may be performed at intervals in the positioning process to update the transformation matrix. Therefore, positioning accuracy is further improved.

In some embodiments, the positioning system includes at least a terminal and a server, a positioning application is installed on the terminal, and the positioning application can provide a positioning function. The server is a server of the positioning application. The positioning method provided in the embodiments of the invention may be interactively performed by the server of the positioning application and the terminal.

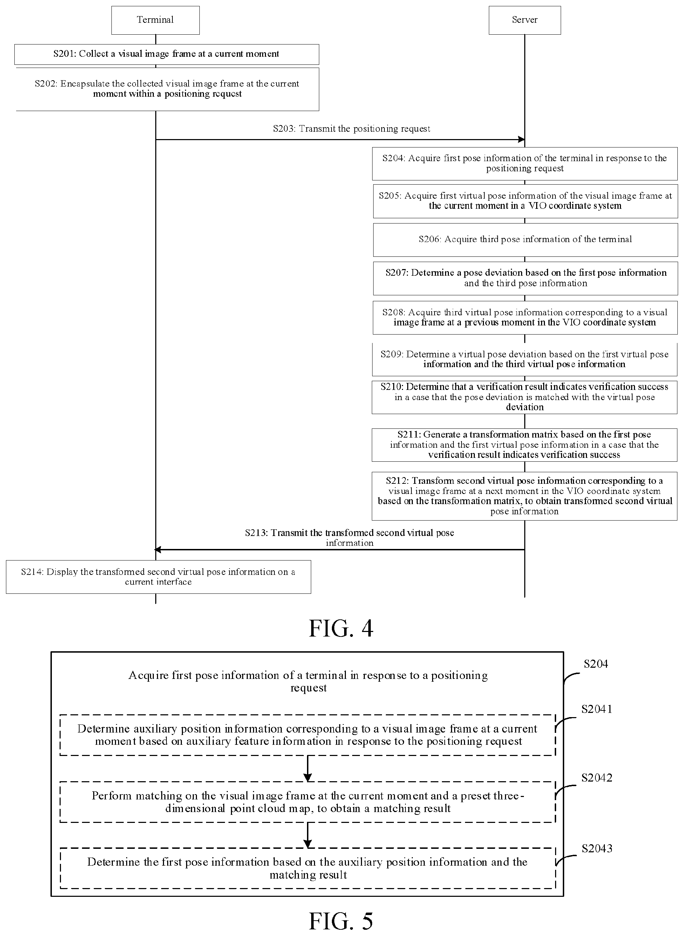

FIG. 4 is another schematic flowchart of a positioning method according to an embodiment of the invention. A process of interactively performing the positioning method by a terminal and a server is shown in FIG. 4, which includes operation S201 and operation S214.

Operation S201: A terminal collects a visual image frame at a current moment.

Herein, the terminal may collect the visual image frame at the current moment by using a camera. The visual image frame at the current moment may be automatically collected by a positioning application according to a preset condition, or may be collected by a user by clicking a button on a client of the positioning application.

After collecting the visual image frame at the current moment, the terminal may further render the visual image frame at the current moment, and display the rendered visual image frame at the current moment on a current interface of the positioning application for the user to view. For example, the terminal performs Canvas rendering on the visual image frame at the current moment.

Operation S202: The terminal encapsulates the collected visual image frame at the current moment within a positioning request.

Herein, the positioning request is configured for requesting to determine a position of the user at the current moment.

The terminal may transform the rendered visual image frame at the current moment into an image in a specific format, and encapsulate the image in the specific format within the positioning request. For example, the terminal transforms the rendered visual image frame at the current moment into an image in a Joint Photographic Experts Group (JPG) format.

Operation S203: The terminal transmits the positioning request to a server.

Operation S204: The server acquires first pose information of the terminal in response to the positioning request.

Herein, in a process of acquiring the first pose information by the server, because similar positions, such as floors or elevator entrances, may exist, the server may make inaccurate recognition, and the acquired first pose information is inaccurate. In view of this, in the embodiments of the invention, the terminal may further collect auxiliary feature information of a real position corresponding to the visual image frame at the current moment, and transmit the auxiliary feature information to the server through the positioning request, and the server may determine the first pose information based on the auxiliary feature information. That is, the positioning request may further include the auxiliary feature information of the real position corresponding to the visual image frame at the current moment. The auxiliary feature information is configured for distinguishing similar positions in the visual image frame.

In some embodiments, as shown in FIG. 5, operation S204 of acquiring first pose information of a terminal may be implemented through operation S2041 to operation S2043.

Operation S2041: Determine auxiliary position information corresponding to a visual image frame at a current moment based on auxiliary feature information in response to the positioning request.

Herein, the auxiliary feature information may include at least one of the following: Bluetooth information; and Wi-Fi fingerprint information; The auxiliary position information may include information such as a floor and an elevator entrance.

When the auxiliary position information is determined, auxiliary feature information corresponding to different positions is different, and the server may determine, based on the auxiliary feature information, the auxiliary position information corresponding to the visual image frame at the current moment. For example, in a case that the auxiliary feature information includes first Bluetooth information, the server may determine that the visual image frame at the current moment corresponds to floor 1; or in a case that the auxiliary feature information includes second Bluetooth information, the server may determine that the visual image frame at the current moment corresponds to floor 3.

Operation S2042: Perform feature matching on the visual image frame at the current moment and a preset three-dimensional point cloud map, to obtain a matching result.

Herein, the server performs feature extraction on the visual image frame at the current moment, and performs feature matching on an extracted feature and the preset three-dimensional point cloud map, to obtain the matching result. The matching result includes at least one visual image frame matched with the extracted feature, and each visual image frame corresponds to one piece of pose information. Matching of the extracted feature with the preset three-dimensional point cloud map may be calculation of a similarity between the extracted feature and a corresponding feature in the preset three-dimensional point cloud map. For example, the extracted feature is represented in the form of feature vector, and the preset three-dimensional point cloud map is also represented in the form of feature vector. Therefore, a Euclidean distance between the two feature vectors may be calculated, and the Euclidean distance is determined as the similarity between the extracted feature and the corresponding feature in the preset three-dimensional point cloud map.

The extracted feature is matched with the preset three-dimensional point cloud map, which means that the similarity between the extracted feature and the corresponding feature in the preset three-dimensional point cloud map is greater than a similarity threshold. For example, the similarity threshold is 90%, and if the calculated similarity is greater than 90%, it may be considered that the extracted feature is matched with the preset three-dimensional point cloud map.

Operation S2043: Determine the first pose information based on the auxiliary position information and the matching result.

Herein, the server can determine the first pose information corresponding to the visual image frame at the current moment by comparing the auxiliary position information with pose information corresponding to the at least one visual image frame matched with the extracted feature.

In the embodiments of the invention, the server takes the auxiliary position information as reference information, whereby a problem of low accuracy of recognition of the first pose information in similar scenarios can be effectively alleviated. Therefore, positioning accuracy is improved.

Operation S205: The server acquires first virtual pose information of the visual image frame at the current moment in a VIO coordinate system.

Herein, the server may determine a reference pose of the VIO coordinate system and establish the VIO coordinate system based on an VIO function of a visual API when a user triggers the VIO function; and then, acquire, for the visual image frame at the current moment, the first virtual pose information, relative to the reference pose, in the VIO coordinate system based on the VIO function.

Operation S206: The server acquires third pose information of the terminal.

Herein, the third pose information is pose information (i.e., real pose information) of a visual image frame at a previous moment that is prior to the current moment and that is adjacent to the current moment in a GCS. The visual image frame at the previous moment may be referred to as a third visual image frame.

In the process of determining the first pose information by the server, a deflection error between the first pose information and actual pose information may be large. Therefore, in some embodiments, a double-verification mechanism may be introduced, and mutual verification is performed on the visual image frame at the previous moment that is prior to the current moment and that is adjacent to the current moment and the visual image frame at the current moment, to improve accuracy of the first pose information.

Herein, after acquiring the visual image frame at the previous moment, the server may determine the third pose information according to the preset three-dimensional point cloud map and auxiliary position information corresponding to the visual image frame at the previous moment. In some embodiments, if the server cannot acquire the third pose information of the terminal, that is, positioning fails, the server may acquire pose information of a visual image frame at a next moment that is subsequent and adjacent to the current moment, and perform mutual verification on the visual image frame at the next moment and the visual image frame at the current moment.

Operation S207: The server determines a pose deviation based on the first pose information and the third pose information.

Herein, the pose deviation (i.e., a real pose deviation) includes a real relative position and a real relative orientation of the visual image frame at the previous moment and the visual image frame at the current moment in a world coordinate system.

In the embodiments of the invention, the first pose information includes geographic position information and orientation information of the visual image frame at the current moment in the GCS, and the third pose information includes real pose information of the visual image frame at the previous moment in the GCS, that is, includes real geographic position information and real orientation information of the visual image frame at the previous moment in the GCS. Therefore, when the real pose deviation is determined, a deviation between the geographic position information of the visual image frame at the current moment in the GCS and the real geographic position information of the visual image frame at the previous moment in the GCS may be calculated, to obtain the real relative position, and a deviation between the orientation information of the visual image frame at the current moment in the GCS and the real orientation information of the visual image frame at the previous moment in the GCS may be calculated, to obtain the real relative orientation.

Operation S208: The server acquires third virtual pose information of a visual image frame at a previous moment in the VIO coordinate system.

For the visual image frame at the previous moment, the server may acquire the third virtual pose information, relative to the reference pose, in the VIO coordinate system based on the VIO function.

Operation S209: The server determines a virtual pose deviation based on the first virtual pose information and the third virtual pose information.

Herein, the virtual pose deviation includes a virtual relative position and a virtual relative orientation of the visual image frame at the previous moment and the visual image frame at the current moment in the VIO coordinate system.

Operation S210: The server determines that a verification result indicates verification success in a case that the pose deviation is matched with the virtual pose deviation.

In some embodiments, the server may compare the pose deviation (i.e., real pose deviation) with the virtual pose deviation, and determine that the verification result indicates verification success in a case that the pose deviation is identical to the virtual pose deviation. Alternatively, in some embodiments, the server may compare the real pose deviation with the virtual pose deviation, and determine that the verification result indicates verification success in a case that the real pose deviation and the virtual pose deviation are both less than a preset deviation threshold.

In some other embodiments, in a case that the pose deviation (i.e., real pose deviation) is different from the virtual pose deviation, the server can determine that the verification result indicates verification failure, that is, a positioning error exists or the VIO coordinate system is offset. In this case, the server may acquire the visual image frame at the next moment that is collected by the terminal, and perform mutual verification on the image frame at the current moment and the visual image frame at the next moment until the verification result indicates verification success.

Operation S211: The server generates a transformation matrix based on the first pose information and the first virtual pose information in a case that the verification result indicates verification success.

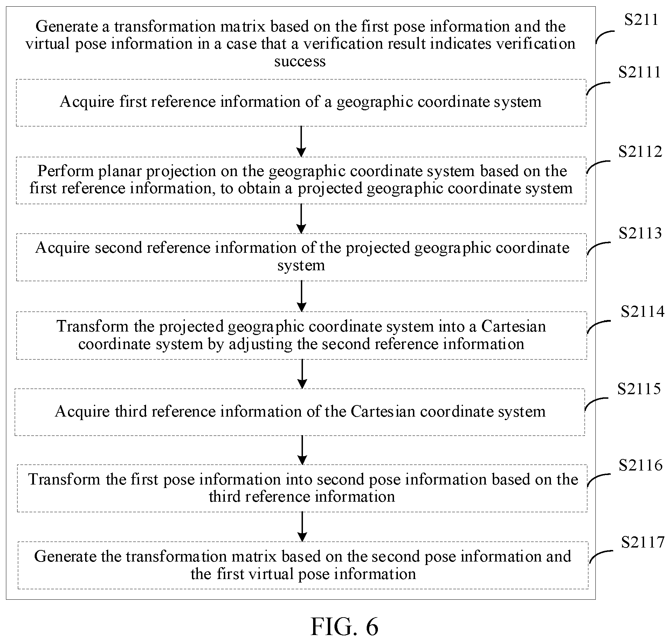

In some embodiments, as shown in FIG. 6, operation S211 of generating a transformation matrix may be implemented through operation S2111 to operation S2116.

Operation S2111: Acquire first reference information of a GCS.

Herein, the first reference information includes a reference orientation and a reference position of the GCS.

Operation S2112: Perform planar projection on the GCS based on the first reference information, to obtain a projected GCS.

In the GCS, geographic position information and orientation information that correspond to a visual image frame are defined based on a spherical surface, and a range corresponding to the GCS is relatively large. Planar projection may be performed on the GCS based on the first reference information, to obtain the projected GCS, whereby the range corresponding to the GCS is reduced.

Operation S2113: Acquire second reference information of the projected GCS.

Herein, the second reference information includes a reference orientation and a reference position of the projected GCS.

Operation S2114: Transform the projected GCS into a Cartesian coordinate system by adjusting the second reference information.

In the VIO coordinate system, geographic position information and orientation information that correspond to a visual image frame are defined based on a rectangular coordinate system, which is different from that of a world coordinate system. To establish a relationship between the projected GCS and the VIO coordinate system, the server may transform the projected GCS into the Cartesian coordinate system. In the Cartesian coordinate system, geographic position information and orientation information that correspond to a visual image frame may be defined based on a rectangular coordinate system, and reference information of the Cartesian coordinate system is identical.

Herein, after determining the reference information of the Cartesian coordinate system, the server may adjust the second reference information, to make the second reference information consistent with the reference information of the Cartesian coordinate system, and transform the projected GCS into the Cartesian coordinate system.

Operation S2115: Acquire third reference information of the Cartesian coordinate system.

Operation S2116: Transform the first pose information into second pose information based on the third reference information.

Herein, based on the third reference information of the Cartesian coordinate system, the server can transform pose information (that is, the first pose information), relative to the first reference information, of the visual image frame at the current moment in the visual coordinate system into pose information (that is, the second pose information), relative to the third reference information, of the visual image frame at the current moment in the Cartesian coordinate system.

Operation S2117: Generate the transformation matrix based on the second pose information and the first virtual pose information.

Because the Cartesian coordinate system and the VIO coordinate system have a same definition, for a same visual image frame at a current moment, the server can obtain a transformation matrix T by determining a rotation relationship between second pose information and a first virtual pose.

Operation S212: The server transforms second virtual pose information corresponding to a visual image frame at a next moment in the VIO coordinate system based on the transformation matrix, to obtain transformed second virtual pose information.

Herein, the transformed second virtual pose information includes position information and orientation information that correspond to the visual image frame at the next moment in the GCS.

For the next moment that is subsequent and adjacent to the current moment, the terminal may collect the visual image frame at the next moment via the camera. The visual image frame at the next moment may be automatically collected by the positioning application according to a preset condition, or may be collected by the server of the positioning application in response to a clicking operation of the user after the user clicks a button on the client of the positioning application. Then, the terminal may render the visual image frame at the next moment, and display the rendered visual image frame at the next moment on a current interface of the positioning application, for the user to view.

In addition, the terminal may further transmit the collected visual image frame at the next moment to the server, and the server acquires the second virtual pose information, relative to the reference pose, of the visual image frame at the next moment in the VIO coordinate system based on the VIO function. Then, the server transforms the second virtual pose information based on the transformation matrix, to determine real pose information of the terminal at the next moment, without the need of performing positioning for the next moment based on an auxiliary position and a three-dimensional point cloud map. Therefore, impact of transmission latency and sensor precision on positioning accuracy is avoided, and positioning accuracy is improved.

In some embodiments, in an application scenario where path navigation is required, the user may further input, through the positioning application on the terminal, target position information for current path navigation. An input manner includes, but is not limited to, a text input manner and a voice input manner. After receiving the target position information for the current path navigation that is transmitted by the terminal, the server determines path information based on the transformed second virtual pose information and the target position information. The path information includes guidance information for reaching a target position corresponding to the target position information.

Herein, the target position information may indicate a target position that the user needs to reach in a particular environment when the user is in the particular environment. For example, the target position information indicates a target position that the user needs to reach in an indoor building when the user is in the indoor building, or indicates a target position that the user needs to reach in a scenic area when the user is in the scenic area.

In the embodiments of the invention, in the process of determining the path information, the server acquires model information corresponding to the visual image frame at the current moment; then, generates a virtual scene in the VIO coordinate system based on the model information corresponding to the visual image frame at the current moment; next, determines, based on the first pose information and the target position information, the guidance information for reaching the target position from a position corresponding to the first pose information; integrates the guidance information for reaching the target position from the position corresponding to the first pose information within the virtual scene based on the transformation matrix, to obtain an integrated virtual scene; and finally, determines the guidance information for reaching the target position corresponding to the target position information from the integrated virtual scene based on the transformed second virtual pose information.

Herein, the model information corresponding to the visual image frame is a three-dimensional geometric model obtained by mapping pixel data in an image frame to a geometric model in a three-dimensional space in computer vision and computer graphics. The model information corresponding to the visual image frame at the current moment includes information, such as a POI, an object, and a scene, of the visual image frame at the current moment in the GCS.

In the embodiments of the invention, the process of acquiring the model information corresponding to the visual image frame at the current moment by the server involves recovering or inferring information about a three-dimensional structure from a two-dimensional image, that is, transformation from an image into a model. The model may be a surface, a shape, or a more abstract geometric structure of an object in the GCS. Acquisition of the model information from the visual image frame may be implemented through the following operations. First, feature points, such as a corner, an edge, and a texture, of a POI, an object, a scene, and the like are detected and extracted from the visual image frame. The feature points are configured for estimating a shape and a position of an object in a subsequent operation. Then, internal parameters (such as a focal length and a point) and external parameters (such as an orientation and a position of a camera) of a camera are determined, which are configured for transforming image coordinates into a GCS of the scene. Then, three-dimensional coordinates of a surface of the object are estimated. Then, a complete three-dimensional model of the object is reconstructed.

The virtual scene may be a three-dimensional virtual scene, which can provide POIs, guidance signs, or guidance paths with different distances and sizes for the user, and can further enhance immersive experience and realism of the user in a path navigation and positioning process.

In some embodiments, the server may further perform initialization to generate the virtual scene in the VIO coordinate system based on the reference information of the VIO coordinate system; then, transform the model information corresponding to the visual image frame at the current moment based on the transformation matrix, to obtain the model information of the visual image frame at the current moment in the VIO coordinate system, and integrate the model information corresponding to the visual image frame at the current moment in the VIO coordinate system within the virtual scene; next, integrate the guidance information for reaching the target position from the position corresponding to the first pose information within the virtual scene based on the transformation matrix, to obtain the integrated virtual scene; and finally, determine the guidance information for reaching the target position corresponding to the target position information from the integrated virtual scene for the next moment that is subsequent and adjacent to the current moment.

In the foregoing process, as the moment changes, the model information corresponding to the visual image frame may change, that is, visual pose information of the user in the world coordinate system may change. The visual pose information may include a visual position and a visual orientation, such as a position and a rotation angle of a camera. To ensure accuracy of superimposition of the guidance information and the real visual image frame, the visual pose information in the virtual scene needs to be consistent with the visual pose information of the user in the world coordinate system.

In some embodiments, the terminal may acquire model information corresponding to the visual image frame at the next moment that is subsequent and adjacent to the current moment. In a case that the model information corresponding to the visual image frame at the current moment is different from the model information corresponding to the visual image frame at the next moment, it may be determined that visual pose information of the visual image frame at the next moment in the world coordinate system changes. In this case, the visual pose information corresponding to the integrated virtual scene may be updated based on the model information corresponding to the visual image frame at the next moment, to obtain an updated virtual scene. Finally, the guidance information for reaching the target position corresponding to the target position information is determined from the updated virtual scene based on the transformed second virtual pose information. That is, a change in model information corresponding to visual image frames at different moments is detected, and the visual pose information in the virtual scene is updated in real time, to keep the pose information of the guidance information consistent with the pose information of the real visual image frame.

In the embodiments of the invention, the visual pose information of the visual image frame is acquired, and the visual pose information of the virtual scene is updated in real time. Therefore, accuracy of superimposition of the virtual guidance information and the real visual image frame can be ensured, and a navigation effect can be improved.

Operation S213: The server transmits the transformed second virtual pose information to the terminal.

In some embodiments, the server may further transmit the guidance information for reaching the target position corresponding to the target position information to the terminal.

Operation S214: The terminal displays the transformed second virtual pose information on a current interface.

In some embodiments, the terminal may further display the guidance information for reaching the target position corresponding to the target position information on the current interface.

According to the positioning method provided in the embodiments of the invention, after the first pose information of the terminal is acquired in response to the positioning request, the first virtual pose information of the visual image frame at the current moment in the VIO coordinate system is acquired; then, the transformation matrix is generated based on the first pose information and the first virtual pose information; and finally, the second virtual pose information corresponding to the visual image frame at the next moment that is subsequent and adjacent to the current moment in the VIO coordinate system is transformed based on the transformation matrix, to obtain the transformed second virtual pose information. In a positioning process, first, a transformation matrix is obtained based on real positioning information and VIO virtual positioning information of a server at a current moment, and then, VIO virtual pose information (including position information and orientation information) at a next moment is transformed based on the transformation matrix, to obtain real pose information at the next moment, without the need of performing positioning for the next moment by using a positioning engine on the server and a sensor on the terminal. Therefore, impact of transmission latency and sensor precision on positioning accuracy is avoided, and positioning accuracy is improved. In addition, because the transformation matrix at the next moment is determined based on the current moment, server positioning may be performed at intervals in the positioning process to update the transformation matrix. Therefore, positioning accuracy is further improved.

The following describes exemplary application of the embodiments of the invention in an actual application scenario.

In a current mini-program-embedded AR navigation solution, based on a virtuality-reality integrated mode, a POI and a sign are taken as icons, and are superimposed on a camera image in proportion according to relative front-rear and left-right positions; and however, rendering of a three-dimensional scene and a real camera image is not achieved. In addition, in a positioning process, position information can be returned by using an integrated positioning engine on a server, and orientation angle information is acquired by using a compass on a mobile phone. However, the following problems may occur.

On one hand, electromagnetic interference may exist in an indoor environment, and may affect a direction of the compass on the mobile phone, whereby the acquired orientation angle information is inaccurate. In addition, a frame rate returned by the compass within the mini program is insufficient, whereby the acquired orientation angle information may be inaccurate in a case that the mobile phone moves fast. On the other hand, in a process of performing positioning by using the integrated positioning engine on the server, impact of round-trip transmission time when a positioning request is transmitted to the server is not considered, whereby positioning may be not performed timely in an area with a poor network. In addition, when an acquired camera image is transmitted to the server end for image recognition, cases that network latency may exist and a current mobile phone orientation and displacement may have changed in an image transmission process are also not considered. Due to the foregoing factors, virtual information may be not matched with an actual position and orientation of a camera in the real world, whereby accuracy of AR navigation is low and immersive experience of a user is poor.

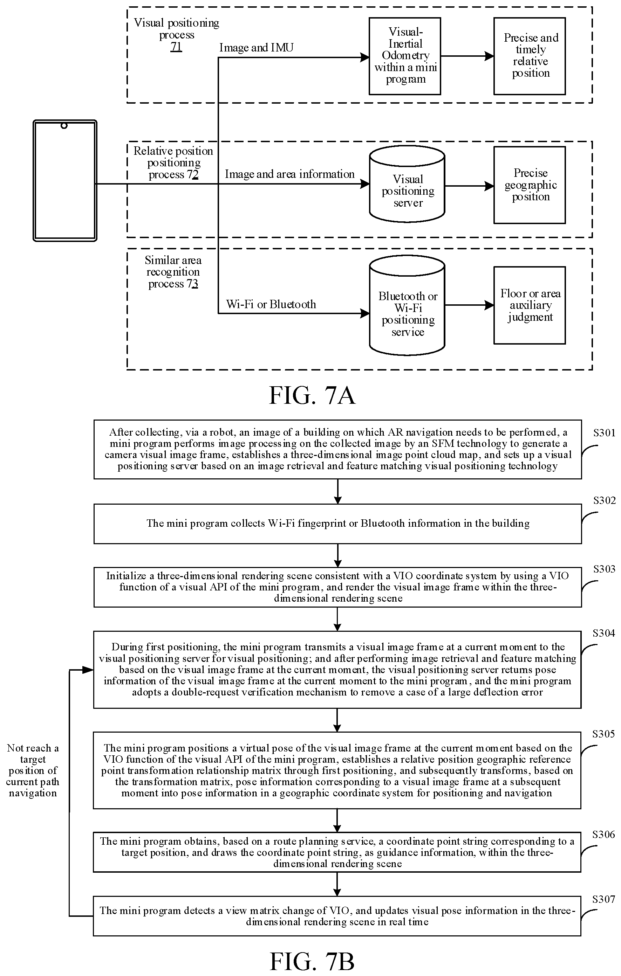

The embodiments of the invention provide a positioning method, which is applied to an indoor AR walking navigation scenario. As shown in FIG. 7A, when indoor AR navigation is performed within a mini program, in a visual positioning process 71, a current camera picture is acquired by using a camera API of the mini program, and is transmitted to a visual positioning server for first visual positioning. That is, a precise and timely relative position is determined by VIO within the mini program. For example, a geographic position and a camera reference point are determined. Next, in a relative position positioning process 72, relative position positioning is performed through VIO of the mini program. That is, a geographic reference point transformation relationship matrix is established by using a visual positioning server. Subsequently, a current camera pose matrix returned by VIO of the mini program is transformed into geographic coordinates based on the geographic reference point transformation relationship matrix for positioning, to obtain a precise geographic position, and that a user reaches a destination is indicated through virtual information. In addition, in a similar area identification process 73, by introducing a Bluetooth or Wi-Fi positioning service, problems, such as cross-layer and similar area positioning errors in a pure visual positioning solution, can be further alleviated. For example, auxiliary judgment of floors or areas can be implemented. In this way, a large positioning reference point error caused by problems, such as sensor precision and transmission latency, in a conventional mini program environment can be effectively improved, which in turn causes problems such as mismatching between the real world and virtual information and poor AR reality and immersive experience. That is, positioning accuracy is improved, and accuracy of superposition of virtual information and a real image of a camera is improved. In addition, timeliness of intermediate positioning is high, resulting in good immersive experience of a user. In addition, by introducing the Bluetooth and Wi-Fi positioning service, the problems, such as cross-layer and similar area positioning errors, in the pure visual positioning solution can be further alleviated. Therefore, positioning accuracy is further improved.

An implementation process of a positioning method provided in the embodiments of the invention, as shown in FIG. 7B, includes operation S301 to operation S307.

Operation S301: After collecting, via a robot, an image of a building on which AR navigation needs to be performed, a mini program performs image processing on the collected image by an SFM technology to generate a camera visual image frame, establishes a three-dimensional image point cloud map, and sets up a visual positioning server based on an image retrieval and feature matching visual positioning technology.

Operation S302: The mini program collects Wi-Fi fingerprint or Bluetooth information in the building.

In this way, it is convenient to subsequently determine a floor and an area based on the Wi-Fi fingerprint or Bluetooth information collected by the mini program.

Operation S303: Initialize a three-dimensional rendering scene consistent with a VIO coordinate system by using a VIO function of a visual API of the mini program, and render the visual image frame within the three-dimensional rendering scene.

Operation S304: During first positioning, the mini program transmits a visual image frame at a current moment to the visual positioning server for visual positioning; and after performing image retrieval and feature matching based on the visual image frame at the current moment, the visual positioning server returns pose information (including geographic position and orientation information) of the visual image frame at the current moment to the mini program, and the mini program adopts a double-request verification mechanism to remove a case of a large deflection error (that is, a case of a large error between an orientation of a virtual visual return point and an actual camera orientation).

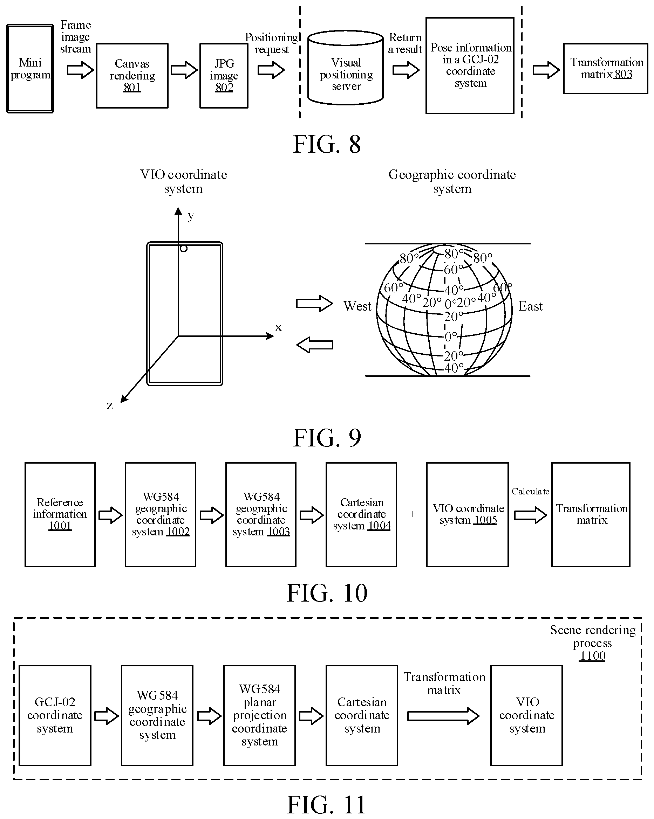

FIG. 8 is a schematic flowchart of first visual positioning according to an embodiment of the invention. As shown in FIG. 8, first, a mini program acquires a visual image frame at a current moment (that is, an image frame at the current moment in a frame image stream), and performs Canvas rendering 801 on the visual image frame at the current moment, to obtain a visual image frame at the current moment that is subjected to Canvas rendering, and displays the visual image frame at the current moment that is subjected to Canvas rendering on a current interface of a terminal. Next, the mini program transforms the visual image frame at the current moment that is subjected to Canvas rendering into an image 802 in a JPG format, encapsulates the image 802 in the JPG format within a positioning request, and transmits the positioning request to a visual positioning server. After receiving the positioning request, the visual positioning server returns, based on image retrieval and feature matching, pose information corresponding to the visual image frame at the current moment in a GCJ-02 coordinate system to the mini program, and the mini program subsequently calculates a transformation matrix 803 based on the pose information corresponding to the visual image frame at the current moment in the GCJ-02 coordinate system. The pose information corresponding to the visual image frame at the current moment in the GCJ-02 coordinate system includes GCJ-02 coordinates relative to the True North Azimuth Angle (that is, reference orientation information). The transformation matrix 803 is configured for implementing transformation between the VIO coordinate system and the GCJ-02 coordinate system.

During the first visual positioning, a large error may exist between an orientation returned by the visual positioning server and an actual orientation of the camera, causing a positioning error. In view of this, a double-verification process is added in the embodiments of the invention, that is, mutual verification is performed by using two requests during the first positioning. Therefore, accuracy of the first positioning is improved. First, for a first visual image frame corresponding to a current moment, after receiving a response indicating that the first visual image frame is successfully positioned, the mini program transmits a positioning request to the visual positioning server again immediately or at a relatively short time interval, to verify a second visual image frame corresponding to a next moment. Next, after receiving a response indicating that the second visual image frame is successfully positioned, the mini program verifies whether the returned pose information of the second visual image frame is consistent with the returned pose information of the first visual image frame, and whether position information (such as longitude and latitude) and orientations of the first visual image frame and the second visual image frame that are acquired based on the VIO function are consistent. If the information is inconsistent, it indicates that a positioning error exists or that the VIO function is unstable. A third visual image frame and the second visual image frame may be verified in the foregoing manner, or the first visual positioning is performed again. If the information is consistent, it indicates verification success, and operation S305 may be performed. In a case that the mini program does not receive the response indicating that the second visual image frame is successfully positioned, the mini program may transmit a positioning request to the visual positioning server again, until a response message indicating that the second visual image frame is successfully positioned is received from the visual positioning server, and mutual verification of the second visual image frame and the first visual image frame succeeds. If the verification succeeds, when the mini program transmits a next positioning request to the visual positioning server, the positioning request carries context information of the returned pose information of the second visual image frame, and the visual positioning server can determine that positioning is continuous.

In addition, when positioning is performed by using the visual positioning server, inaccurate recognition of similar scenes, such as floors or elevator entrances, may occur, leading to inaccurate positioning. In view of this, a positioning process for similar scenes, such as floors and elevator entrances, is added in the embodiments of the invention. After collecting Bluetooth and Wi-Fi information of a building on which AR navigation needs to be performed, the mini program transmits the collected information to the visual positioning server as an auxiliary parameter, and the visual positioning server performs positioning based on the auxiliary parameter and returns pose information. Therefore, the problem of inaccurate recognition of similar scenes can be effectively alleviated, and positioning accuracy can be improved.

Operation S305: The mini program positions a virtual pose of the visual image frame at the current moment based on the VIO function of the visual API of the mini program, establishes a relative position geographic reference point transformation relationship matrix through first positioning, and subsequently transforms, based on the transformation relationship matrix, pose information corresponding to a visual image frame at a subsequent moment into pose information in a GCS for positioning and navigation, VIO capable of returning a relatively precise relative position within a particular interval.

FIG. 9 is a schematic diagram of a VIO coordinate system and a GCS according to an embodiment of the invention. As shown in FIG. 9, in the GCS, real pose information corresponding to a visual image frame at a current moment is defined based on a spherical surface, and in the VIO coordinate system, information corresponding to the visual image frame at the current moment is defined based on a rectangular coordinate system. Therefore, a transformation matrix needs to be calculated, to implement transformation between the GCS and the VIO coordinate system.

FIG. 10 is a schematic flowchart of calculation of a transformation matrix according to an embodiment of the invention. As shown in FIG. 10, after determining reference information 1001 of a GCJ-02 coordinate system, a mini program transforms the GCJ-02 coordinate system into a WG584 GCS 1002 by using a deflection correction algorithm; performs planar projection on the WG584 GCS, to obtain a WG584 GCS 1003 subjected to planar projection; obtains pose information corresponding to a visual image frame at a current moment in a local Cartesian coordinate system 1004 based on reference information of the WG584 GCS subjected to planar projection; and calculates a transformation matrix based on pose information corresponding to the visual image frame at the current moment in a VIO coordinate system 1005. In addition, after a time interval (such as 5 s), the mini program can transmit a positioning request to a server. Furthermore, the mini program may position a relative position of VIO every 1 s, to update the transformation matrix.

Operation S306: The mini program obtains, based on a route planning service, a coordinate point string corresponding to a target position, and draws the coordinate point string, as guidance information, within the three-dimensional rendering scene.

In the embodiments of the invention, to enable a user to have more immersive experience, a rendering process of a three-dimensional scene and a real camera image may be added. The mini program obtains, based on the route planning service, as well as the visual image frame at the current moment and the target position of the current path navigation, the coordinate point string corresponding to the target position in the GCS; and then, draws the coordinate point string, as the guidance information, within the three-dimensional rendering scene based on the transformation matrix. The guidance information includes virtual guidance information such as route guidance, a sign, and POI.

FIG. 11 is a schematic flowchart of a scene rendering procedure 1100 according to an embodiment of the invention. As shown in FIG. 11, after determining reference information of a GCJ-02 coordinate system, a mini program transforms the GCJ-02 coordinate system into a WG584 GCS by using a deflection correction algorithm; performs planar projection on the WG584 GCS, to obtain a WG584 planar projection coordinate system; transforms the WG584 planar projection coordinate system into a Cartesian coordinate system based on reference information of the WG584 planar projection coordinate system; and draws a coordinate point string, as guidance information, in a Cartesian coordinate system within a three-dimensional rendering scene in a VIO coordinate system based on the transformation matrix.

Operation S307: The mini program detects a view matrix change of VIO, and updates visual pose information (that is, camera coordinates and orientation angle) in the three-dimensional rendering scene in real time.

In the embodiments of the invention, visual image frames at different moments may include different model information, and the mini program may detect model information included in a visual image frame at a current moment and a visual image frame at a next moment that is subsequent and adjacent to the current moment, to determine whether the view matrix of VIO changes. In a case that the view matrix of VIO changes, the camera coordinates and orientation in the three-dimensional rendering scene are updated according to the model information included in the visual image frame at the next moment that is subsequent and adjacent to the current moment, whereby the guidance information can be matched with the visual image frame at the next moment that is subsequent and adjacent to the current moment. Therefore, accuracy of superimposition of the guidance information and the visual image frame at the next moment that is subsequent and adjacent to the current moment is ensured.

Operation S304 to operation S307 are cyclically performed until the target position of the current path navigation is reached.

In the embodiments of the invention, in a process in which the user moves toward the target position based on the guidance information, the mini program may detect second virtual pose information of the visual image frame at the next moment that is subsequent and adjacent to the current moment in the VIO coordinate system; transform the second virtual pose information based on the transformation matrix, to obtain transformed second virtual pose information; and determine whether the user reaches the target position based on the transformed second virtual pose information and the target position information.

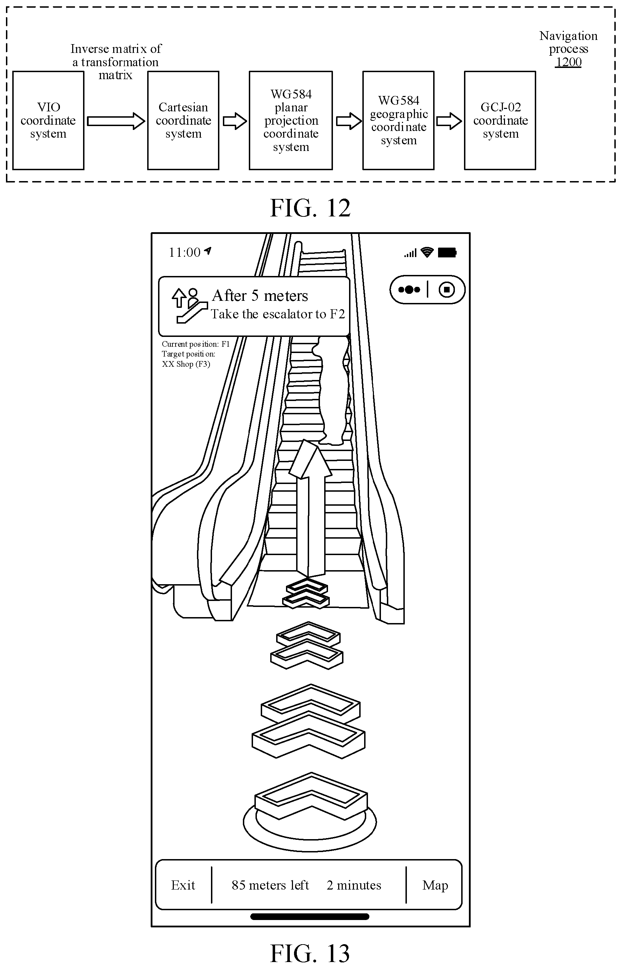

FIG. 12 is a schematic flowchart of a navigation process 1200 according to an embodiment of the invention. As shown in FIG. 13, a mini program transforms a VIO coordinate system based on an inverse matrix of a transformation matrix, to obtain a Cartesian coordinate system; next, transforms the Cartesian coordinate system into a WG584 planar projection coordinate system by adjusting reference information of the local Cartesian coordinate system; then, performs inverse projection on a WG584 planar projection coordinate system by using an inverse projection algorithm, to obtain a WG584 GCS; and finally, transforms the WG584 GCS into a GCJ-02 coordinate system by using a deflection algorithm, to obtain transformed second virtual pose information in the GCJ-02 coordinate system.

FIG. 13 is a schematic diagram of an application scenario of a positioning method according to an embodiment of the invention. As shown in FIG. 13, in a process of navigating from a current position (F1) of a user to a target position (F3), content, such as a guidance sign and a guidance path, may be displayed in a visual image frame at a current moment, to generate path information for current path navigation for the user.

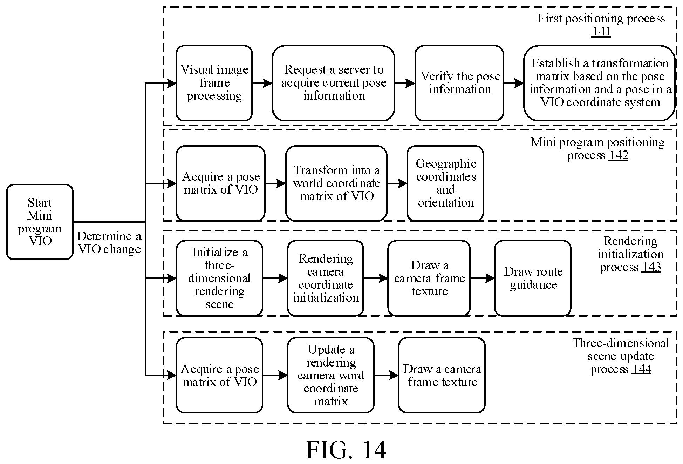

FIG. 14 is a schematic flowchart of a positioning method added with scene rendering according to an embodiment of the invention. As shown in FIG. 14, first, according to a first positioning process 141, a processed visual image frame is transmitted to a server, to request to acquire pose information of a visual image frame at a current moment. Then, after the pose information is verified, a transformation matrix is established according to the pose information passing verification and a pose matrix in a VIO coordinate system, whereby a case of a large deflection error of the pose information can be removed, and accuracy of first positioning can be improved. In a mini program positioning process 142, a mini program determines virtual geographic coordinates and an orientation of a visual image frame at a subsequent moment in the VIO coordinate system, and transforms the virtual geographic coordinates and the orientation of the visual image frame at the subsequent moment in the VIO coordinate system based on the transformation matrix, to perform positioning and generate path information for a user to reach a target position.

In the embodiments of the invention, to increase reality and immersive experience of the user for AR navigation, a rendering initialization process 143 and a three-dimensional scene update process 144 are added to the process of generating the path information. After generating the three-dimensional scene according to the visual image frame, the mini program updates the visual pose information in the three-dimensional scene in real time based on a view matrix corresponding to the visual image frame at the subsequent moment, whereby the user can perceive indication signs of different positions and differences in distance or size of indication paths. Therefore, immersive experience and reality of the user for AR navigation are improved.

In the embodiments of the invention, content of user information, such as the visual image frame collected by the terminal and the target position information, is involved. If data related to user information or corporate information is involved, when the embodiments of the invention are applied to specific products or technologies, permission or consent of the user is required, and collection, use, and processing of the relevant data need to comply with relevant laws and regulations and standards of relevant countries and regions.

The following further describes an exemplary structure of the positioning device 354 provided in the embodiments of the present application that is implemented as software modules. In some embodiments, as shown in FIG. 2, the positioning device 354 includes: a first acquisition module 3541, configured to acquire first pose information of a terminal in response to a positioning request, the positioning request corresponding to a visual image frame collected by the terminal at a current moment, and the first pose information being pose information of the visual image frame at the current moment in a GCS; a second acquisition module 3542, configured to acquire first virtual pose information of the visual image frame at the current moment in a VIO coordinate system; a generation module 3543, configured to generate a transformation matrix based on the first pose information and the first virtual pose information; a processing module 3544, configured to transform second virtual pose information of a visual image frame at a next moment that is subsequent and adjacent to the current moment in the VIO coordinate system based on the transformation matrix, to obtain transformed second virtual pose information; and a determination module 3545, configured to determine pose information of the terminal at the next moment based on the transformed second virtual pose information.

In some embodiments, the generation module 3543 is further configured to acquire first reference information of the GCS, the first reference information including reference orientation information and reference position information of the GCS; transform the first pose information into second pose information based on the first reference information, the second pose information being pose information of the visual image frame at the current moment in a Cartesian coordinate system; and generate the transformation matrix based on the second pose information and the first virtual pose information.

In some embodiments, the generation module 3543 is further configured to perform planar projection on the GCS based on the first reference information, to obtain a projected GCS; acquire second reference information of the projected GCS; the second reference information including reference orientation information and reference position information of the projected GCS; transform the projected GCS into the Cartesian coordinate system by adjusting the second reference information; acquire third reference information of the Cartesian coordinate system, the third reference information including reference orientation information and reference position information of the Cartesian coordinate system; and transform the first pose information into the second pose information based on the third reference information.

In some embodiments, the generation module 3543 is further configured to acquire third pose information of the terminal, the third pose information being pose information of a visual image frame at a previous moment that is prior to the current moment and that is adjacent to the current moment in the GCS; verify the third pose information and the first pose information, to obtain a verification result; and generate the transformation matrix based on the first pose information and the first virtual pose information in a case that the verification result indicates verification success.

In some embodiments, the generation module 3543 is further configured to determine a pose deviation based on the first pose information and the third pose information; acquire third virtual pose information of the visual image frame at the previous moment that is prior to the current moment and that is adjacent to the current moment in the VIO coordinate system; determine a virtual pose deviation based on the first virtual pose information and the third virtual pose information; and determine, in a case that the pose deviation is identical to the virtual pose deviation, that the verification result indicates verification success.

In some embodiments, the apparatus further includes: a path generation module, configured to receive target position information of current positioning that is transmitted by the terminal; and determine path information based on the transformed second virtual pose information and the target position information, the path information including guidance information for reaching a target position corresponding to the target position information.

In some embodiments, the path generation module is further configured to acquire model information of the visual image frame at the current moment; generate a virtual scene in the VIO coordinate system based on the model information of the visual image frame at the current moment; determine, based on the first pose information and the target position information, the guidance information for reaching the target position from a position corresponding to the first pose information; and integrate the guidance information for reaching the target position from the position corresponding to the first pose information within the virtual scene based on the transformation matrix, to obtain an integrated virtual scene; and determine the guidance information for reaching the target position from the integrated virtual scene based on the transformed second virtual pose information.

In some embodiments, the path generation module is further configured to acquire model information of the visual image frame at the next moment that is subsequent and adjacent to the current moment; update visual pose information of the integrated virtual scene based on the model information of the visual image frame at the next moment in a case that the model information of the visual image frame at the current moment is different from the model information corresponding to the visual image frame at the next moment, to obtain an updated virtual scene; and determine the guidance information for reaching the target position from the updated virtual scene based on the transformed second virtual pose information.

In some embodiments, the positioning request further includes auxiliary feature information of a position (i.e., real position) of the visual image frame at the current moment; and the auxiliary feature information is configured for distinguishing similar positions in the visual image frame; and the first acquisition module is further configured to determine auxiliary position information of the visual image frame at the current moment based on the auxiliary feature information in response to the positioning request; perform feature matching on the visual image frame at the current moment and a preset three-dimensional point cloud map, to obtain a matching result; and determine the first pose information based on the auxiliary position information and the matching result.

In addition, the description of the apparatus provided in the embodiments of the invention is similar to the description of the foregoing method embodiments, and the apparatus embodiments has beneficial effects similar to those of the method embodiments. Details are not described again. For technical details undisclosed in the apparatus embodiments, refer to the description of the method embodiments of the invention.

The embodiments of the invention provide a computer program product, which includes executable instructions. The executable instructions are computer instructions. The executable instructions are stored in a computer-readable storage medium. A processor of an electronic device reads the executable instructions from the computer-readable storage medium, and executes the executable instructions, to cause the electronic device to perform the foregoing method provided in the embodiments of the invention.

The embodiments of the invention provide a storage medium having executable instructions stored therein. A processor executes the executable instructions to perform the method provided in the embodiments of the invention, such as the method shown in FIG. 3.

In some embodiments, the storage medium may be a computer-readable storage medium, for example, a memory such as a ferromagnetic RAM (FRAM), an ROM, a programmable ROM (PROM), an erasable PROM (EPROM), an electrically EPROM (EEPROM), a flash memory, a magnetic surface memory, an optic disk, or a compact disk ROM (CD-ROM). Alternatively, the computer-readable storage medium may be a device including one or any combination of the foregoing memories.

In some embodiments, the executable instructions may be in the form of program, software, software module, script, or code, and written in any form of programming language (including compiled or interpreted languages, or declarative or procedural languages), and may be deployed in any form, including deployed as a stand-alone program or deployed as a module, component, sub-routine, or another unit suitable for use in a computing environment.

For example, the executable instructions may, but do not necessarily, correspond to a file in a file system, and may be stored in a part of a file that having another program or data stored therein, for example, be stored in one or more scripts in a Hypertext Markup Language (HTML) file, stored in a file that is specially configured for a program in discussion, or stored in a plurality of collaborative files (such as files having one or modules, sub-programs, or code parts stored therein). For example, the executable instructions may be deployed to be executed on one electronic device, or on a plurality of electronic devices located at one position, or on a plurality of electronic devices distributed at a plurality of positions and interconnected through a communication network.

Those described above are merely embodiments of the invention and are not intended to limit the scope of protection of the invention. Any modification, equivalent replacement, and improvement made within the spirit and scope of the invention fall within the scope of protection of the invention.

## Claims

1. A positioning method, performed by an electronic device and comprising:
acquiring first pose information of a terminal in response to a positioning request, the positioning request corresponding to a visual image frame collected by the terminal at a current moment, and the first pose information being pose information of the visual image frame at the current moment in a geographic coordinate system (GCS);
acquiring first virtual pose information of the visual image frame at the current moment in a Visual Inertial Odometer (VIO) coordinate system;
generating a transformation matrix based on the first pose information and the first virtual pose information;
transforming, based on the transformation matrix, second virtual pose information of a visual image frame at a next moment that is subsequent and adjacent to the current moment in the VIO coordinate system, to obtain transformed second virtual pose information; and
determining pose information of the terminal at the next moment based on the transformed second virtual pose information.

2. The method according to claim 1, wherein generating the transformation matrix based on the first pose information and the first virtual pose information comprises:
acquiring first reference information of the GCS, the first reference information comprising reference orientation information and reference position information of the GCS;
transforming the first pose information into second pose information based on the first reference information, the second pose information being pose information of the visual image frame at the current moment in a Cartesian coordinate system; and
generating the transformation matrix based on the second pose information and the first virtual pose information.

3. The method according to claim 2, wherein transforming the first pose information into the second pose information based on the first reference information comprises:
performing planar projection on the GCS based on the first reference information, to obtain a projected GCS;
acquiring second reference information of the projected GCS, the second reference information comprising reference orientation information and reference position information of the projected GCS;
transforming the projected GCS into the Cartesian coordinate system by adjusting the second reference information;
acquiring third reference information of the Cartesian coordinate system, the third reference information comprising reference orientation information and reference position information of the Cartesian coordinate system; and
transforming the first pose information into the second pose information based on the third reference information.

4. The method according to any one of claims 1 to 3, wherein generating the transformation matrix based on the first pose information and the first virtual pose information comprises:
acquiring third pose information of the terminal, the third pose information being pose information of a visual image frame at a previous moment that is prior and adjacent to the current moment in the GCS;
verifying the third pose information and the first pose information, to obtain a verification result; and
generating the transformation matrix based on the first pose information and the first virtual pose information based on the verification result indicating successful verification.

5. The method according to claim 4, wherein verifying the third pose information and the first pose information, to obtain the verification result comprises:
determining a pose deviation based on the first pose information and the third pose information;
acquiring third virtual pose information of the visual image frame at the previous moment that is prior and adjacent to the current moment in the VIO coordinate system;
determining a virtual pose deviation based on the first virtual pose information and the third virtual pose information; and
determining, in response to the pose deviation being identical to the virtual pose deviation, that the verification result indicates successful verification.

6. The method according to any one of claims 1 to 5, further comprising:
receiving target position information for current path navigation from the terminal;
determining path information based on the transformed second virtual pose information and the target position information, the path information comprising guidance information for reaching a target position corresponding to the target position information.

7. The method according to claim 6, wherein determining the path information based on the transformed second virtual pose information and the target position information comprises:
acquiring model information of the visual image frame at the current moment;
generating a virtual scene in the VIO coordinate system based on the model information of the visual image frame at the current moment;
determining, based on the first pose information and the target position information, the guidance information for reaching the target position from a position corresponding to the first pose information;
integrating the guidance information for reaching the target position from the position corresponding to the first pose information within the virtual scene based on the transformation matrix, to obtain an integrated virtual scene; and
determining the guidance information for reaching the target position from the integrated virtual scene based on the transformed second virtual pose information.

8. The method according to claim 7, wherein determining the guidance information for reaching the target position from the integrated virtual scene based on the transformed second virtual pose information comprises:
acquiring model information of the visual image frame at the next moment that is subsequent and adjacent to the current moment;
updating visual pose information of the integrated virtual scene based on the model information of the visual image frame at the next moment when the model information of the visual image frame at the current moment is different from the model information of the visual image frame at the next moment, to obtain an updated virtual scene; and
determining the guidance information for reaching the target position from the updated virtual scene based on the transformed second virtual pose information.

9. The method according to any one of claims 1 to 8, wherein the positioning request further comprises auxiliary feature information of a position of the visual image frame at the current moment; and the auxiliary feature information is configured to distinguish similar positions in the visual image frame; and acquiring the first pose information of the terminal in response to the positioning request comprises:
determining auxiliary position information of the visual image frame at the current moment based on the auxiliary feature information in response to the positioning request;
performing feature matching on the visual image frame at the current moment and a preset three-dimensional point cloud map, to obtain a matching result; and
determining the first pose information based on the auxiliary position information and the matching result.

10. A positioning apparatus, comprising:
a first acquisition module, configured to acquire first pose information of a terminal in response to a positioning request, the positioning request corresponding to a visual image frame collected by the terminal at a current moment, and the first pose information being pose information of the visual image frame at the current moment in a geographic coordinate system (GCS);
a second acquisition module, configured to acquire first virtual pose information of the visual image frame at the current moment in a Visual Inertial Odometer (VIO) coordinate system;
a generation module, configured to generate a transformation matrix based on the first pose information and the first virtual pose information;
a processing module, configured to transform, based on the transformation matrix, second virtual pose information of a visual image frame at a next moment that is subsequent and adjacent to the current moment in the VIO coordinate system, to obtain transformed second virtual pose information; and
a determination module, configured to determine pose information of the terminal at the next moment based on the transformed second virtual pose information.

11. An electronic device, comprising:
a memory, configured to store executable instructions; and
a processor, configured to execute the executable instructions stored in the memory to implement the positioning method according to any one of claims 1 to 9.

12. A computer-readable storage medium, having stored therein executable instructions that, when executed by a processor, cause the processor to implement the positioning method according to any one of claims 1 to 9.

13. A computer program product, comprising executable instructions stored in a computer-readable storage medium; wherein
when a processor of an electronic device reads the executable instructions from the computer-readable storage medium and executes the executable instructions, the electronic device is caused to perform the positioning method according to any one of claims 1 to 9.
